# EUROPEAN PATENT APPLICATION

(11) **EP 1 964 958 A2**
(43) Date of publication of application: **03.09.2008**
(21) Application number: 07122492.7
(22) Date of filing: 06.12.2007
(51) Int. Cl.: D06F 35/00

(54) **Washing machine performing rinsing operation and control method thereof**

(30) Priority: 27.02.2007 KR 20070019665
(71) Applicant: Samsung Electronics Co., Ltd., Suwon-si, Gyeonggi-do 442-743 (KR)
(72) Inventor: Bang, Eun Suk, Namhyeon-dong, Gwanak-gu Seoul (KR); Pyo, Sang Yeon, Paldal-gu, Suwon-si Gyeonggi-do (KR); Kim, Hyun Sook, Yeongtong-gu, Suwon-si Gyeonggi-do (KR); Park, Jae Ryong, Hwaeseong-si Gyeonggi-do (KR); Kim, Sung Hoon Samsung Electronics Co., Ltd., Suwon-si Gyeonggi-do (KR); Park, Jee Hun, Gyeonggi-do (KR)
(74) Representative: Grünecker, Kinkeldey, Stockmair & Schwanhäusser Anwaltssozietät

(57) **Abstract**

Disclosed herein are a washing machine and a control method of the same that is capable of maximizing a contact time between water and laundry, thereby improving the rinsing efficiency while using a small amount of water. The washing machine includes a water tub, a rotary drum mounted in the water tub to receive laundry, and a circulation unit to supply water from the water tub into the rotary drum. The control method includes detecting an amount of load according to a weight of the laundry, supplying an amount of water set according to the detected amount of load into the water tub, and supplying the water in the water tub to the laundry by alternately operating the rotary drum and the circulation unit.

## Description

### CROSS-REFERENCE TO RELATED APPLICATIONS

This application claims the benefit of Korean Patent Application No. 2007-19665, filed on February 27, 2007 in the Korean Intellectual Property Office, the disclosure of which is incorporated herein by reference.

### BACKGROUND

### 1. Field

The present invention relates to a washing machine and a control method of the same that is capable of performing rinsing using a small amount of water.

### 2. Description of the Related Art

Generally, a washing machine (normally, a drum type washing machine) is a machine, including a water tub to receive water (wash water or rinse water) and a cylindrical rotary drum rotatably mounted in the water tub to receive laundry, that washes the laundry by lifting and dropping the laundry in the rotary drum along the inner surface of the rotary drum during the rotation of the rotary drum.

This washing machine detects the weight of laundry (the amount of load) to decide the amount of rinse water to be used, according to a user's selection of a washing course, supplies water having an amount sufficient to rinse the laundry into the water tub according to the decided amount of rinse water, and performs a rinsing operation while water (specifically, rinse water) is brought into contact with the laundry and the laundry is dropped by the rotation of the rotary drum.

When water is supplied into the water tub to perform the rinsing, however, it is necessary not only to fill a space defined between the water tub and the rotary drum with water but also to fill the rotary drum with water such that the laundry is immersed in the water. As a result, a large amount of water is used.

When a small amount of water is used to rinse the laundry, on the other hand, the rinsing efficiency is lowered. Consequently, there is a need for a solution to increase the contact amount and the contact time between water and laundry utilizing water between the water tub and the rotary drum.

### SUMMARY

Therefore, it is an aspect of the embodiment to provide a washing machine and a control method of the same that is capable of maximizing a contact time between water and laundry, thereby improving the rinsing efficiency while using a small amount of water.

It is another aspect of the embodiment to provide a washing machine and a control method of the same that is capable of performing rinsing with water between a water tub and a rotary drum by the provision of a circulation unit to circulate water, thereby reducing the water consumption.

It is a further aspect of the embodiment to provide a washing machine and a control method of the same that is capable of controlling the operation times of a rotary drum and a circulation unit, such that the operation time of the rotary drum is different from the operation time of the circulation unit, to increase the contact time between water and laundry, thereby accomplishing more effective rinsing.

Additional aspects and/or advantages will be set forth in part in the description which follows and, in part, will be apparent from the description, or may be learned by practice of the invention.

The foregoing and/or other aspects are achieved by providing a control method of controlling a washing machine including a water tub, a rotary drum mounted in the water tub to receive laundry, and a circulation unit to supply water from the water tub into the rotary drum, the control method including detecting an amount of load according to a weight of the laundry, supplying an amount of water set according to the detected amount of load into the water tub, and supplying the water in the water tub to the laundry by alternately operating the rotary drum and the circulation unit.

The set amount of water may be a minimum amount of rinse water set based on the detected amount of load.

The water supplied into the water tub may be rinse water to rinse the laundry.

The supplying the water in the water tub to the laundry includes controlling operation times of the rotary drum and the circulation unit, such that the operation time of the rotary drum is different from the operation time of the circulation unit, to maximize the contact time between the rinse water and the laundry.

The circulation unit may be stopped during the operation of the rotary drum, and the rotary drum may be stopped during the operation of the circulation unit, to perform a rinsing operation to increase the contact time between the rinse water and the laundry.

The control method further includes counting the operation times of the rotary drum and the circulation unit, and, when the counted operation times each exceed a predetermined time, the rotary drum and the circulation unit are stopped.

The predetermined time is based on a motor operation rate set based on the detected amount of load.

The rotary drum is operated when the set motor operation rate is on, and the circulation unit is operated when the set motor operation rate is off.

The foregoing and/or other aspects are achieved by providing a washing machine including a water tub to receive water, a rotary drum mounted in the water tub configured to receive laundry, a circulation unit to supply the water in the water tub into the rotary drum, a water supply unit to control the supply of water, a washing heater to heat water, and a control unit to control the water supply unit to supply water into the water tub and alternately control the rotary drum and the circulation unit to supply the water in the water tub to the laundry such that the laundry is rinsed.

The control unit may detect an amount of load according to a weight of the laundry and may control the water supply unit to supply an amount of water set according to the detected amount of load into the water tub.

The washing machine further includes a motor to drive the rotary drum, and the control unit controls operation times of the motor and the circulation unit, such that the operation time of the motor is different from the operation time of the circulation unit, to maximize the contact time between the rinse water and the laundry.

The control unit may stop the circulation unit during an operation of the motor, and stops the motor, during an operation of the circulation unit, to perform a rinsing operation to maximally increase the contact time between the rinse water and the laundry.

The control unit counts the operation times of the motor and the circulation unit, and, when the counted operation times each exceed a predetermined time, stops the motor and the circulation unit, respectively.

The foregoing and/or other aspects are achieved by providing a washing machine, including a rotary drum configured to receive laundry; a circulation unit supplying water receivable into the rotary drum; a control unit alternatively operating the rotary drum and the circulation unit to supply water to the laundry based on an amount of load detected according to a weight of the laundry.

The foregoing and/or other aspects are achieved by providing a method of controlling a washing machine including a rotary drum and a circulation unit, including detecting an amount of load according to a weight of laundry; and alternatively operating the rotary drum and the circulation unit to supply water to the laundry based on the detected amount of load.

### BRIEF DESCRIPTION OF THE DRAWINGS

These and/or other aspects and advantages will become apparent and more readily appreciated from the following description of the embodiments, taken in conjunction with the accompanying drawings, of which:
FIG. 1 is a sectional view illustrating the circulation of water during a rinsing operation of a washing machine according to the present embodiment;
FIG. 2 is a perspective view of a rotary drum applied to the present embodiment;
FIG. 3 is a sectional view of the rotary drum;
FIG. 4 is a control block diagram of the washing machine according to the present embodiment; and
FIGS. 5A and 5B are flow charts illustrating a rinsing control method of the washing machine according to the present embodiment.

### DETAILED DESCRIPTION OF THE EMBODIMENTS

Reference will now be made in detail to the embodiment, examples of which are illustrated in the accompanying drawings, wherein like reference numerals refer to like elements throughout. The embodiment is described below to explain the present invention by referring to the figures.

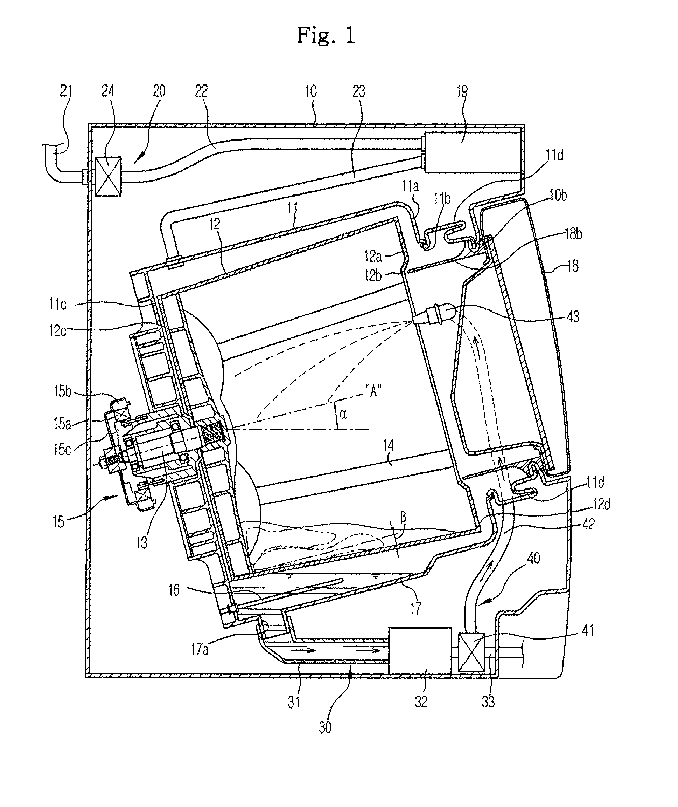

FIG. 1 is a sectional view illustrating the circulation of water during a rinsing operation of a washing machine according to the present embodiment.

Referring to FIG. 1, the washing machine includes a drum-type water tub 11 mounted in a machine body 10 to receive water (wash water or rinse water) and a cylindrical rotary drum 12 rotatably mounted in the water tub 11.

The water tub 11 is mounted at a predetermined angle α to the installation surface of the washing machine such that a front part 11a, having an inlet 11b formed therein, is located at a higher position than a rear part 11c. The rotary drum 12 is mounted in the water tub 11 in the same inclination angle as the water tub 11 such that a front part 12a, having an inlet 12b formed therein, is located at a higher position than a rear part 12c.

Outside the rear part 11c of the water tub 11 is mounted a drive unit, such as a motor 15, to rotate a rotary shaft 13 connected to the rotary drum 12 such that washing, rinsing, and spin-drying operations are performed. The motor 15 includes a stator 15a fixed to the rear part 11c of the water tub 11, a rotor 15b rotatably disposed around the stator 15a, and a rotary plate 15c connected between the rotor 15b and the rotary shaft 13.

At the inside bottom of the water tub 11 is mounted a washing heater 16 to heat water (specifically, detergent water) supplied into the water tub 11. For the installation of the washing heater 16, a heater receiving part 17 is formed in the bottom of the water tub 11. The heater receiving part 17 protrudes downward such that a predetermined amount of water is able to gather in the heater receiving part 17 while the washing heater 16 is received in the heater receiving part 17. Consequently, the washing heater 16 is immersed in the water gathered in the heater receiving part 17. Since the washing heater 16 is received in the heater receiving part 17, the rotary drum 12 can be rotated without interference between the rotary drum 12 and the washing heater 16.

In the front of the machine body 10 is formed an inlet 18b corresponding to the inlet 12b of the rotary drum 12 and the inlet 11b of the water tub 11, such that laundry can be put into or taken out from the rotary drum 12. At the machine body 10, adjacent to the inlet 18b, is mounted a door 18 to open and close the inlet 18b. Between an inlet 10b of the machine body 10 and the inlet 11 b of the water tub 11 is mounted a cylindrical diaphragm 11 d to prevent the leakage of wash water.

Above the water tub 11 are mounted a detergent supply unit 19 to supply detergent and a water supply unit 20 to supply water (wash water or rinse water).

The detergent supply unit 19 has several partitioned spaces. The detergent supply unit 19 is mounted at the front side of the machine body 10 such that a user is able to easily put detergent and rinse in the respective partitioned spaces. The detergent supply unit 19 includes a preliminary washing detergent box to store detergent used for preliminary washing, a main washing detergent box to store detergent used for main washing, and a rinse box to store rinse used for rinsing. The details of the detergent supply unit 19 are disclosed in Korean Patent Application No. 2003-0011317, which has been filed in the name of the applicant of the present application. Of course, other well-known technologies may be applied to the detergent supply unit 19.

The water supply unit 20 includes a first water supply pipe 22 connected between an external water supply pipe 21, through which water (wash water or rinse water) is supplied into the water tub 11, and the detergent supply unit 19, a second water supply pipe 23 connected between the detergent supply unit 19 and the water tub 11, and a water supply valve 24 mounted on the first water supply pipe 22 to control the supply of water. Consequently, water is supplied into the water tub 11 via the detergent supply unit 19 such that detergent is supplied into the water tub 11 together with the water.

The washing machine further includes a drainage unit 30 to drain the water in the water tub 11 and a circulation unit 40 to supply the water in the water tub 11 into the rotary drum 12. The drainage unit 30 includes a first drainage pipe 31 connected to a drainage port 17a formed at the heater receiving part 17 in the bottom of the water tub 11 to guide the water in the water tub 11 to the outside, a drainage pump 32 mounted on the first drainage pipe 31, and a second drainage pipe 33 connected to the outlet of the drainage pump 32. The circulation unit 40 includes a flow channel switching valve 41 mounted on the second drainage pipe 33, a circulation pipe 42 extending from the flow channel switching valve 41 to the inlet 12b of the rotary drum 12, and an injection nozzle 43 mounted at the outlet of the circulation pipe 42. The flow channel switching valve 41 serves to switch flow channels such that water from the outlet of the drainage pump 32 is drained to the outside or flows to the circulation pipe 42. The flow channel switching valve 41 may be an electric three-way valve, for example. The injection nozzle 43 is mounted adjacent to the inlet 12b of the rotary drum 12 such that the injection nozzle 43 injects water into the rotary drum 12 through the inlet 12b of the rotary drum 12.

Consequently, when the drainage pump 32 is operated while the flow channel switching valve 41 is operated such that water flows to the circulation pipe 42, water in the bottom of the water tub 11 is supplied into the rotary drum 12 through the first drainage pipe 31 and the circulation pipe 42. Also, when the drainage pump 32 is operated while the flow channel switching valve 41 is operated such that water flows to the second drainage pipe 33, the water in the water tub 11 is drained to the outside.

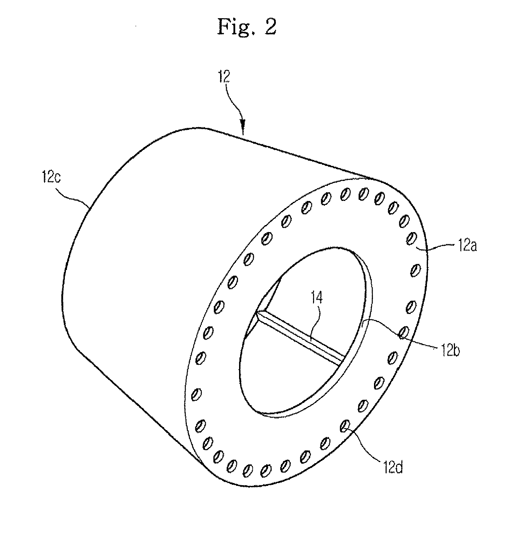

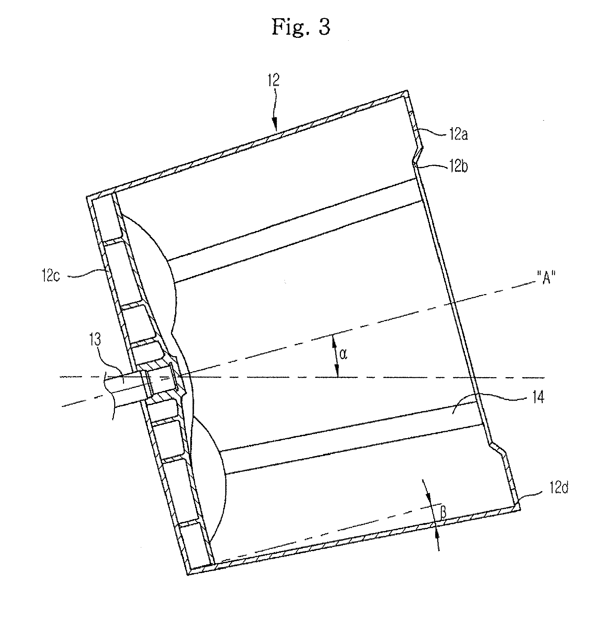

FIG. 2 is a perspective view of a rotary drum applied to the present embodiment, and FIG. 3 is a sectional view of the rotary drum.

Referring to FIGS. 2 and 3, the rotary drum 12 is mounted such that a rotation axis A (shown in FIG. 1) of the rotary drum 12 is at a predetermined angle α to the installation surface of the washing machine while the front part 12a, having the inlet 12b formed therein, is directed forward. In this case, the rotary shaft 13, which is coupled to the center of the rear part 12c of the rotary drum 12, is rotatably supported at the rear central part of the water tub 11 such that the rotary drum 12 can be rotated in the water tub 11.

The rotation axis A of the rotary drum 12 is at the predetermined angle α to the installation surface of the washing machine because, when water is supplied into the rotary drum 12, a predetermined amount of water necessary to wash and rinse is gathered in the rotary drum 12 such that laundry is brought into contact with the water.

In the front part 12a of the rotary drum 12 are formed a plurality of spin-drying holes 12d. Inside the rotary drum 12 are mounted a plurality of lifters 14 to raise and drop laundry in the rotary drum 12 during the rotation of the rotary drum 12. The circumference of the rotary drum 12 is at a predetermined angle β to the rotation axis A of the rotary drum 12 and the holes 12d are formed along the edge of the front part 12a in order to guide water moving in the radial direction of the rotary drum 12 due to a centrifugal force caused when the rotary drum 12 is rotated during spin-drying to the holes 12d of the front part 12a of the rotary drum 12 along the incline such that the water is drained out of the rotary drum 12. For effective drainage, the tilt angle β at the circumference of the rotary drum 12 is preferably 0.5 degrees or more, but may be any other angle greater than 0.0 degrees.

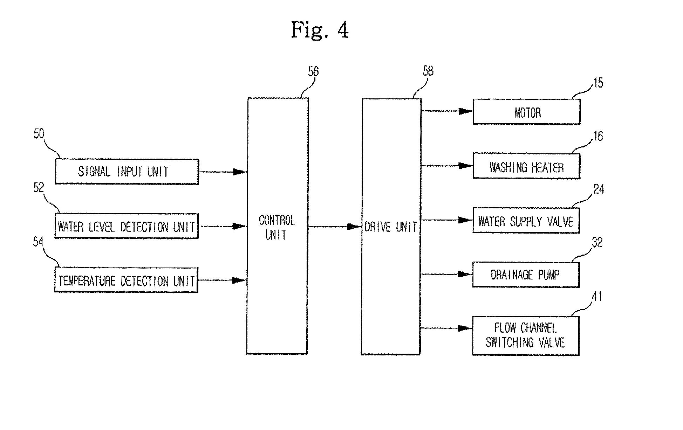

FIG. 4 is a control block diagram of the washing machine according to the present embodiment. In addition to the components shown in FIG. 1, the washing machine further includes a signal input unit 50, a water level detection unit 52, a temperature detection unit 54, a control unit 56, and a drive unit 58.

The signal input unit 50 inputs operation information, such as a washing course, a washing temperature, spin-drying RPM, and the addition of rinsing, which are selected by a user, to the control unit 56. The water level detection unit 52 detects the water level of water supplied into the water tub 11, and the temperature detection unit 54 detects the temperature of water supplied into the water tub 11.

The control unit 56 is a microcomputer to control the washing machine based on the operation information inputted from the signal input unit 50. The control unit 56 stores information on the amount of rinse water, motor RPM and operation rate (motor on-off time), and rinsing time set according to the amount of load (the weight of laundry) in the selected washing course.

For rinsing, therefore, the control unit 56 controls the operation of the motor 15 and the circulation unit 40 to maximize the contact time between the water and the laundry, such that a rinsing process to separate detergent from the laundry is more effectively carried out, through on/off control to alternately operate the rotary drum 12 or the circulation unit 40 after the supply of a predetermined amount of rinse water.

The drive unit 58 drives the motor 15, the washing heater 16, the water supply valve 24, the drainage pump 32, and the flow channel switching valve 41 according to a drive control signal of the control unit 56.

Hereinafter, the operation of the washing machine with the above-stated construction and a control method of the washing machine will be described.

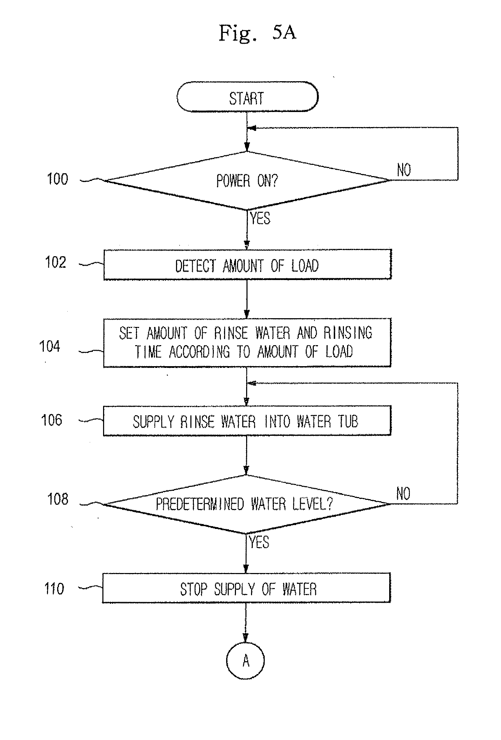

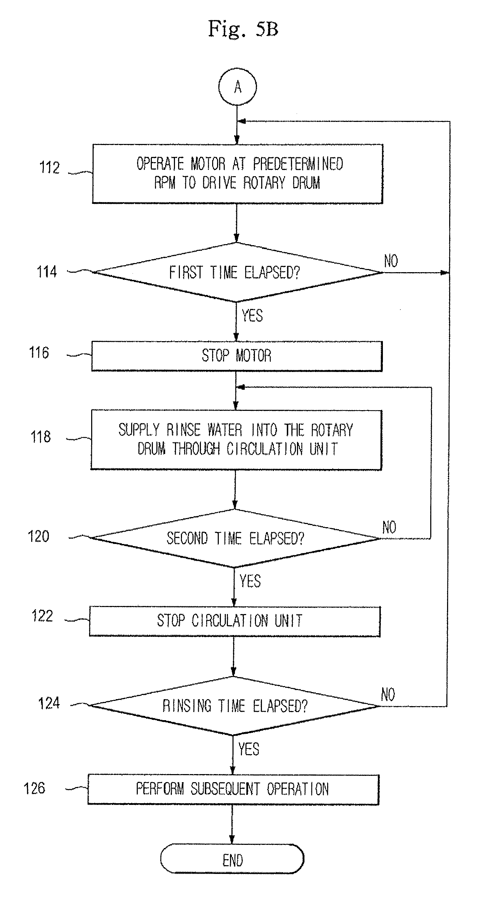

FIGS. 5A and 5B are flow charts illustrating a rinsing control method of the washing machine according to the present embodiment.

First, when a user puts laundry in the rotary drum 12 and selects operation information, such as a washing course, spin-drying RPM, and the addition of rinsing, based on the kind of the laundry placed in the drum 12, the operation information selected by the user is inputted to the control unit 56 through the signal input unit 50.

Subsequently, the control unit 56 determines whether the power is on so as to perform a rinsing operation based on the operation information inputted from the signal input unit 54 (operation 100).

When the power is on, the control unit 56 detects the amount of load (the weight of laundry) put in the rotary drum 12 (operation 102), and sets the minimum amount of rinse water, motor operation rate (motor on-off time), and rinsing time for each washing course based on the detected amount of load (operation 104). If the power is not on, the sequence returns to operation 100.

Subsequently, the control unit 56 controls the water supply unit 20 to supply the minimum amount of rinse water set for each washing course based on the amount of load. As a result, the water supply valve 24 is opened, and water (rinse water) flows through the external water supply pipe 21, and the first water supply pipe 22 and the second water supply pipe 23, whereby the rinse water is supplied into the water tub 11 (operation 106).

During the supply of rinse water for rinsing, the water level detection unit 52 detects the water level of the rinse water supplied into the water tub 11 to determine whether the detected water level is a predetermined water level, which is a water level decided according to the set amount of rinse water (operation 108).

When the detected water level is not at the predetermined water level, the control unit 56 controls water to be continuously supplied into the water tub 11 until the water level reaches the predetermined water level. When the detected water level reaches the predetermined water level, the control unit 56 controls the water supply valve 24 to be turned off such that the supply of water is interrupted (operation 110).

After the interruption of the water supply, the control unit 56 operates the motor 15 at a predetermined RPM (less than a washing RPM) to drive the rotary drum 12 such that the laundry is rinsed by the rinse water supplied into the water tub 11 (operation 112).

During the operation of the motor 15 to drive the rotary drum 12, the operation of the circulation unit 40 is stopped such that the laundry is brought into contact with the rinse water gathered between the water tub 11 and the rotary drum 12, and therefore, detergent contained in the laundry is removed from the laundry.

When the rotary drum 12 is driven by the motor 15, it is preferred that the predetermined RPM of the rotary drum 12 be equal to or less than a value set for each washing course depending upon the amount of load.

The control unit 56 then counts motor operation time to remove the detergent from the laundry by the rotation of the rotary drum 12 to determine whether a predetermined first time, which is the contact time between the rinse water and the laundry by the operation of the motor, for example, the motor-on time set depending upon the motor operation rate, has elapsed (operation 114). When the first time has elapsed, the control unit 56 stops the motor 15 (operation 116). If the first time has not elapsed, the sequence returns to operation 112.

When the motor 15 is stopped, the control unit 56 operates the circulation unit 40 such that the laundry is rinsed by the rinse water supplied into the water tub 11. As a result, the flow channel switching valve 41 of the circulation unit 50 is operated such that the outlet of the drainage pump 32 communicates with the circulation pipe 42. As the drainage pump 32 is operated, the rinse water in the bottom of the water tub 11 is supplied into the rotary drum 12 through the drainage pipe 31 and the circulation pipe 42 (operation 118). Then, the rinse water supplied into the rotary drum 12 is injected to the laundry through the injection nozzle 43 such that the laundry is brought into uniform contact with the rinse water, and therefore, the detergent contained in the laundry is more effectively removed from the laundry.

Then, the control unit 56 counts the circulation time to remove the detergent from the laundry through the injection of the rinse water by the rotation of the circulation unit 40 to determine whether a predetermined second time, which is the contact time between the rinse water circulated by the operation of the circulation unit and the laundry, for example, the motor-off time set depending upon the motor operation rate, has elapsed (operation 120). When the second time has elapsed, the control unit 56 stops the circulation unit 40 (operation 122). If the second time has not elapsed, the sequence returns to operation 120.

As can be clearly understood from the above description, the circulation unit 40 is stopped during the operation of the motor 15 to drive the rotary drum 12 such that the laundry is brought into contact with the rinse water gathered between the water tub 11 and the rotary drum 12, whereby the detergent, contained in the laundry, is removed from the laundry. When the motor 15 is stopped, on the other hand, the circulation unit 40 is operated to introduce the rinse water gathered between the water tub 11 and the rotary drum 12 into the rotary drum 12 such that the laundry is brought into contact with the rinse water, whereby the detergent, contained in the laundry, is removed from the laundry. In this way, the present embodiment maximizes the contact time between the laundry and the rinse water during rinsing, thereby more effectively improving the rinsing efficiency while using a small amount of water.

During the rinsing, the control unit 56 determines whether the rinsing time set according to the amount of load has elapsed (operation 124). When the rinsing time has not elapsed, the procedure returns to operation 112 to continuously perform the rinsing operation to rinse the laundry with the rinse water gathered between the water tub 11 and the rotary drum 12.

When it is determined at operation 124 that the rinsing time has elapsed, the control unit 56 performs a subsequent operation set according to the amount of load (operation 126).

As apparent from the above description, the washing machine according to the present embodiment and the control method of the same have the effect of maximizing the contact time between water and laundry, thereby improving the rinsing efficiency while using a small amount of water.

Furthermore, the washing machine according to the present embodiment and the control method of the same have the effect of performing rinsing with water between the water tub and the rotary drum by the provision of the circulation unit to circulate water, thereby reducing the water consumption. Also, the washing machine according to the present embodiment and the control method of the same have the effect of controlling the operation time of the rotary drum and the circulation unit, such that the operation time of the rotary drum is different from the operation time of the circulation unit, to increase the contact time between water and laundry, thereby accomplishing more effective rinsing.

Although an embodiment has been shown and described, it would be appreciated by those skilled in the art that changes may be made in this embodiment without departing from the principles and spirit of the invention, the scope of which is defined in the claims and their equivalents.

## Claims

1. A control method of controlling a washing machine including a water tub, a rotary drum mounted in the water tub to receive laundry, and a circulation unit to supply water from the water tub into the rotary drum, the control method comprising:
detecting an amount of load according to a weight of the laundry;
supplying an amount of water set according to the detected amount of load into the water tub; and
supplying the water in the water tub to the laundry by alternately operating the rotary drum and the circulation unit.

2. The control method according to claim 1, wherein the set amount of water is a minimum amount of rinse water set based on the detected amount of load.

3. The control method according to claim 1, wherein the water supplied into the water tub is rinse water to rinse the laundry.

4. The control method according to claim 3, wherein the supplying the water in the water tub to the laundry includes controlling operation times of the rotary drum and the circulation unit, such that the operation time of the rotary drum is different from the operation time of the circulation unit, to maximize a contact time between the rinse water and the laundry.

5. The control method according to claim 4, wherein the circulation unit is stopped during the operation of the rotary drum, and the rotary drum is stopped during the operation of the circulation unit, to perform a rinsing operation to increase the contact time between the rinse water and the laundry.

6. The control method according to claim 1, further comprising:
counting operation times of the rotary drum and the circulation unit,
wherein when the counted operation times each exceed a predetermined time, the rotary drum and the circulation unit are stopped.

7. The control method according to claim 6, wherein the predetermined time is based on a motor operation rate set according to the detected amount of load.

8. The control method according to claim 7, wherein when the set motor operation rate is on, the rotary drum is operated, and when the set motor operation rate is off, the circulation unit is operated.

9. A washing machine, comprising:
a water tub configured to receive water;
a rotary drum mounted in the water tub configured to receive laundry;
a circulation unit supplying the water in the water tub into the rotary drum;
a water supply unit controlling the supply of water; and
a control unit controlling the water supply unit to supply water into the water tub and alternately controlling the rotary drum and the circulation unit to supply the water in the water tub to the laundry such that the laundry is rinsed.

10. The washing machine according to claim 9, wherein the control unit detects an amount of load according to a weight of the laundry and controls the water supply unit to supply an amount of water set according to the detected amount of load into the water tub.

11. The washing machine according to claim 10, wherein the set amount of water is a minimum amount of rinse water set based on the detected amount of load.

12. The washing machine according to claim 9, wherein the water supplied into the water tub is rinse water to rinse the laundry.

13. The washing machine according to claim 12, further comprising:
a motor driving the rotary drum,
wherein the control unit controls operation times of the motor and the circulation unit, such that the operation time of the motor is different from the operation time of the circulation unit, to maximize a contact time between the rinse water and the laundry.

14. The washing machine according to claim 13, wherein the control unit stops the circulation unit during an operation of the motor, and stops the motor during an operation of the circulation unit, to perform a rinsing operation to increase the contact time between the rinse water and the laundry.

15. The washing machine according to claim 13, wherein the control unit counts the operation times of the motor and the circulation unit, and, when the counted operation times each exceed a predetermined time, the control unit stops the motor and the circulation unit, respectively.

16. The washing machine according to claim 15, wherein the predetermined times are based on a motor operation rate set according to the detected amount of load.

17. The washing machine according to claim 16, wherein the control unit operates the motor when the set motor operation rate is on, and operates the circulation unit when the set motor operation rate is off.

18. A washing machine, comprising:
a rotary drum configured to receive laundry;
a circulation unit supplying water receivable into the rotary drum;
a control unit alternatively operating the rotary drum and the circulation unit to supply water to the laundry based on an amount of load detected according to a weight of the laundry.

19. The washing machine according to claim 18, further comprising a water supply unit supplying water,
wherein the control unit controls a supplied amount of water according to the detected amount of load.

20. A method of controlling a washing machine including a rotary drum and a circulation unit, comprising:
detecting an amount of load according to a weight of laundry; and
alternatively operating the rotary drum and the circulation unit to supply water to the laundry based on the detected amount of load.

21. The method according to claim 20, further comprising supplying an amount of water according to the detected amount of load.
